# EUROPEAN PATENT SPECIFICATION

(11) **EP 2 504 653 B1**
(45) Date of publication and mention of the grant of the patent: **14.05.2014**
(21) Application number: 10807371.9
(22) Date of filing: 26.11.2010
(51) Int. Cl.: F28D 20/00, C09K 5/10, F01K 3/12

(54) **PROCESS TO ACCUMULATE THERMAL ENERGY USING A HEAT- CARRIER FLUID AND CORRESPONDING SYSTEM**
VERFAHREN ZUR WÄRMESPEICHERUNG UNTER VERWENDUNG EINES WÄRMETRÄGERFLUIDS UND ENTSPRECHENDES SYSTEM
PROCÉDÉ POUR L'ACCUMULATION DE L'ÉNERGIE THERMIQUE AU MOYEN D'UN FLUIDE CALOPORTEUR ET SYSTÈME CORRESPONDANT

(30) Priority: 27.11.2009 IT MI20092094
(43) Date of publication of application: 03.10.2012
(73) Proprietor: Finocchiaro, Franco, 20136 Milano (IT); Ausy S.r.L., 27039 Sannazzaro De' Burgondi (PV) (IT)
(72) Inventor: FINOCCHIARO, Franco, 20136 MIlano (IT)
(74) Representative: Banfi, Paolo
(86) International application number: PCT/IB2010/055450
(87) International publication number: WO 2011/064749

(56) References cited:
- DE-C1- 19 806 534
- JP-A- 56 137 097
- US-A- 2 942 411
- US-A- 4 399 656
- US-A- 4 523 629
- US-A1- 2008 276 616

## Description

### Technical field

The present invention relates to a process to accumulate and collect thermal energy at a temperature preferably higher than 95°C, which uses one or more heat-carrier fluids intended to be accumulated in respective accumulation sections, and which is capable of considerably reducing the operative and management cost of the processes and in general of the technical solutions, at present known and adopted, for the accumulation of thermal energy, that are based on the use of heat-carrier fluids.

The present invention also relates to a system for the accumulation and collection of thermal energy which corresponds to and implements the aforementioned process.

### Background art

Nowadays numerous projects are being developed in the art, aimed at optimising and reducing the financial impact of systems for accumulating and storing the thermal energy that is generated from discontinuous industrial sources or from solar radiation, in particular for the purpose of improving efficiency and reducing the running costs in plants for the production of mechanical/electrical energy, which use the thermal energy generated from these discontinuous industrial sources and/or from solar radiation.

In particular, in the field of electrical energy production plants that use appropriately concentrated solar radiation as energy source, also known as "Concentrating Solar Power" plants (CSP), the development of numerous processes and systems to accumulate heat at a medium or preferably high temperature can be seen, in order to compensate for the lack of solar radiation during the hours of darkness.

Included among these advanced systems are those based on the use of heat-carrier fluids, i.e. designed to transport heat, wherein these heat-carrier fluids are provided for accumulation in special accumulation sections, for the purpose of temporarily storing the heat transported by them, in view of a subsequent use of this heat to produce mechanical/electrical energy.

For example, these heat-carrier fluids, designed to be accumulated and then store thermal energy, include mineral oils or organic fluids which, depending on their constituent molecules, can be heated to approximately 400°C without being subject to excessive degradation.

Moreover, heat-carrier fluids comprising molten and eutectic salts can be used, and in particular the eutectic mixture comprising NaNO₃ at 60% and KNO₃ at 40%.

This mixture is advantageous compared with traditional fluids, it has low environmental impact given that its components are used as fertilisers, high melting temperature (220° C), low vapour pressure, high thermal stability (up to 570°C), and is not flammable.

However current systems for storing thermal energy used in industry, and those used in CSP installations, involve plant sections that are particularly onerous from a financial point of view, due to the cost of the heat-carrier fluid used and the intrinsic cost of the storage systems adopted for its accumulation.

Among these known plants, it is mentioned as example the Andasol 1 rated 50 MWe CSP plant, located in Guadix (Spain), which uses molten salts (approx. 30,000 t) in two separate metal tanks insulated with refractory material and operating at different temperatures, with a storage capacity equivalent to approximately 7 plant running hours in the absence of solar radiation.

It is also mentioned patent document US 2008/276616 A1 which discloses a two-tank direct energy storage system, associated with an energy production system, wherein a heat transfer fluid is pumped from a cold oil tank to a hot oil tank, while passing through a solar field where the fluid is heated; and wherein the heated fluid, stored in the hot oil tank, is then pumped through a steam generator or heat exchanger as needed to generate steam and power a turbine to meet energy demands.

This document discloses also a two-tank indirect energy storage system, associated with an energy production system, wherein a molten salt is pumped from a cold salt tank to a heat exchanger, where the salt receives the heat produced by a solar field, and then, once heated, it is pumped to a hot salt tank, and wherein the hot salt is successively pumped out of the hot salt tank to a turbine system, where the heat from the holt salt is used to produce energy.

However also the above two-tank energy storage systems, as disclosed by this document, appear to imply relevant costs of construction.

### Summary of the invention

Compared with the solutions, systems and installations at present known, this invention advantageously offers a new process for the accumulation and collection of thermal energy at medium and high temperatures, which is designed to reduce thermal energy storage and accumulation costs considerably, for example, but not only, in the context of a plant or more general system for the production of mechanical/electrical energy, and which at the same time involves a minor environmental impact and thereby an improved environmental sustainability.

In detail, the process to accumulate thermal energy, which is the object of this invention, comprises the following steps:
a) accumulation of a primary heat-carrier fluid in a secondary plant section at a mean temperature lower than the primary accumulation section, made up of one or more collection subsystems, containing or not material with high thermal inertia and/or heat exchangers;
b) collection of this primary fluid and its feeding to one or more subsections suitable for its heating and comprising one or more heat sources having temperatures higher than that of the primary fluid itself, wherein the thermal energy for heating the primary fluid comes, totally or partially, from discontinuous or variable sources and preferably from solar radiation;
c) heating of the primary fluid in one or more of these heating subsections;
d) subsequent feeding and accumulation of the primary fluid, at the maximum temperature, in the primary accumulation section;
e) collection from this primary accumulation section of the previously heated primary fluid and its feeding to a plant section where there is heat exchange between the primary fluid and a secondary fluid at a lower temperature, as part of a thermodynamic cycle aimed at generating mechanical/electrical energy, with resulting cooling of the primary fluid and simultaneous increase of the secondary fluid temperature to the required conditions of the thermodynamic cycle; and
f) collection of the primary fluid, once cooled in the heat exchange section, and cycle closure by feeding it to the secondary accumulation section.

As explained better further on, with the addition of further details, the process to accumulate thermal energy in accordance with the present invention involves the use of one or more primary heat-carrier fluids with a solidification point higher than or equal to the ambient temperature; it is suitable for application in relation to variable and/or discontinuous heat sources, preferably those in which the heat is provided by solar radiation, but not only, therefore also those in which the heat is provided by industrial plants; moreover, it also involves the accumulation of at least one primary heat-carrier fluid in a respective primary and secondary plant accumulation section, of the tankless type, that is not using metal vessels, or similar containers, mechanically resistant to operating temperatures and self-supporting, in order to contain tightly the primary fluid accumulated.

The tankless accumulation sections, or more concisely the tankless accumulations, used in the process of the invention, are characterised by less use/absence of metal or precious materials, the possibility of being able to be constructed by re-using and adapting decommissioned structures such as for instance tanks/cisterns, and by resistance to mechanical stress and seismic waves, due to the type of assembly and the self-sealing properties of the accumulated primary fluid which, being solid at ambient temperature, tends to solidify in the event of leakage from the surfaces bordering the accumulation sections.

A preferred type of tankless accumulation, adopted in the process for the accumulation of thermal energy in accordance with the present invention, requires the accumulation of a primary fluid in tankless primary and secondary sections, wherein the containment surfaces of these sections are formed by geological and/or artificial barriers, preferably containing material with high thermal inertia.

In particular, this material with high thermal inertia is characterised by a heat transfer coefficient, at the operating temperature, less than or equal to 25 W/mK, preferably less than 5 W/mK, and even more preferably less than 0.5 W/mK.

The use of such material with high thermal inertia is necessary when the nature of the containment material, the operating temperatures of the primary fluid and the ratio between the volume of the primary fluid itself and the surface bordering the accumulation section wherein it is stored do not permit a permanence of the bulk temperature, i.e. of the majority of the mass of the primary fluid, in the expected range and during the fixed time period.

This material with high thermal inertia is assembled so as to create a barrier suitable for containing the primary fluid and allows, due to the introduction of a thermal differential between the barrier exterior and interior, the cooling of the primary fluid and its attainment of solid state in the layers of the same barrier or in its vicinity, thus avoiding the dispersion of the primary fluid and simultaneously maintaining the mean temperature of the accumulation section in the expected range.

In particular, the attainment of the solid state of the primary fluid in the barrier or in its vicinity can occur between the contact surfaces, in the fractures or in the porosities of the barrier component materials.

The barrier can be made up of a single layer or successive layers created with different materials, having different porosity and thermal inertia.

These layers can be created from elements with high thermal inertia such as refractory bricks, insulating panels etc., or materials such as heat-insulating cements and mortar, or loose materials such as clays, pozzolans, perlites.

The primary heat-carrier fluids can be inorganic, for example water, low melt metal alloys, mineral oils or molten salts of K or Li or Na or Mg and their mixtures, in particular LiNO₃, LiNO₃-NaNO₃, KNO3-LiNO₃, KNO₃-NaNO₂-NaNO₃, NaNO₂, NaNO₃, KNO₃, KNO₃-NaNO₃ and especially mixtures of NaNO₃ at 60% and KNO₃ at 40% or organic substances such as thermoil and dowtherm fluids.

Especially significant from a technical/financial point of view is the use, as a primary heat-carrier fluid, of cheap cuts, high boiling derivatives from oil and with high thermal capacity, in particular greater than that of molten salts, and comprising for example fuel oils, charges for furnaces, pitch for cement factories, pyrolyzers or bitumens and/or their derivatives.

Bitumens and pitch are solid or semi-solid at ambient temperature and can be heated to temperatures equal to, or to the order of, 350°-380°C, without causing excessive formation of coke.

Before the development of the present invention, applications of these hydrocarbon cuts as heat-carrier fluids in systems for the storage of thermal energy from discontinuous and/or variable sources were not known.

Among the organic fluids mentioned previously, bitumens have unique peculiarities with respect to organic primary fluids that are used for the storage of thermal energy.

In particular bitumens are made up of asphaltene mixtures (polycondensed aromatics in the presence of nitrogen, sulphur and metals), polar aromatics (resins) and non-polar, saturated long-chain hydrocarbons.

Moreover, bitumens are considered as being materials with high environmental sustainability and low risk, and have negligible vapour pressure.

Moreover, bitumens do not have a specific melting, solidification or boiling point, they are solid at ambient temperature, have high molecular weight and a number of carbon atoms generally greater than 25, are insoluble in water, impermeable and generally hydrophobic, chemically inert, with a flash point higher than 230°C, and are characterised by auto-ignition temperatures higher than 300°C.

It should also be remembered that bitumens are not considered as hazardous according to EU regulations and, at ambient temperature, do not present significant risks to human health and the environment.

Finally bitumens, compared with molten salts, are characterised by greater thermal capacity and lower cost per tonne.

The use of hydrocarbon cuts in thermal energy accumulation systems is particularly advantageous when combined with organic Rankine cycles (ORC), for the purpose of generating electrical energy from primary fluids at medium or low enthalpy effcctively.

The secondary fluids used in the process and system of the invention are usually made up of organic or inorganic molecules or molecule mixtures, and in general are suitable, after receiving heat in a heat exchange section from the primary heat-carrier fluid at a higher temperature, for undergoing physical transformations during a thermodynamic cycle that is typically intended for the production of mechanical/electrical energy, but which could also, more simply, have the function of improving the energy efficiency of a civil or industrial installation.

Therefore, it is clear that both the process and the corresponding system for the accumulation of thermal energy, conforming to the present invention and having the characteristics defined by the respective independent claims, 1 and 12, fully achieve the proposed objects.

Relevant features and further details of the process and system of the invention for the accumulation of thermal energy, specifically regarding the primary and secondary accumulation sections, both epigeal and hypogeal, which are provided and used in this process and system, are defined by the dependent claims 1 to 7.

Additional important and inventive features of the fluid or of the primary fluids used in the process and in the corresponding thermal energy accumulation system, in accordance with the present invention, are defined by dependent claims 8 to 11.

### Brief description of the drawings

In addition to what stated previously, some preferred embodiments of this invention will now be described in detail, to be considered as non-exclusive examples, aimed at illustrating additional aspects, features and advantages of the same invention, with reference to the accompanying drawings, in which:
Fig. 1 is a partial schematic view of a geological/artificial barrier suitable for constructing a tankless section of accumulation of a primary heat-carrier fluid, wherein this accumulation section is used in the process and system to accumulate thermal energy according to the present invention;
Fig. 2 is a partial schematic view of a variation of the geological/artificial barrier in Fig. 1, for the tankless accumulation of thermal energy;
Fig. 3 is a partial schematic view of a further variation of the geological/artificial barrier in Fig. 1, for the tankless accumulation of thermal energy;
Fig. 4 schematically illustrates an element of material with high thermal inertia that is used in the construction of a containment barrier for a tankless accumulation section, used in the process and system to accumulate thermal energy according to the present invention;
Fig. 5 is a perspective schematic view that shows an example of tankless epigeal thermal storage, provided with containment banks in clay material;
Fig. 6 is a perspective schematic view of an example of tankless thermal storage, constructed in a quarry area;
Fig. 7 shows an example of tankless hypogeal thermal storage from artificial cavities formed, with the Frasch method, in deep geological salt layers;
Fig. 8 shows an example of tankless hypogeal multi-barrier thermal storage in artificial cavities formed in a rock salt mine and using a mixture of molten salts as primary heat-carrier fluid;
Fig. 9 shows an example of tankless semi-hypogeal thermal storage, with primary and secondary accumulation sections of a primary heat-carrier fluid situated in a covered multi-barrier vessel;
Fig. 10 illustrates an example of thermal energy accumulation and storage, wherein bitumen is used as the primary heat-carrier fluid; and
Fig. 11 illustrates an example of thermal energy accumulation and storage comprising a tankless epigeal multi-barrier primary accumulation section, and a traditional secondary accumulation section, wherein bitumen is used as the primary heat-carrier fluid.

### Description of some examples and preferred embodiments of the invention

Referring to the drawings and in line with what is already stated, some examples and preferred embodiments of important parts, constructional and structural elements, in particular for the accumulation and storage of a primary heat-carrier fluid, which are provided and used, as described in detail herein below, in the process and in the corresponding thermal energy accumulation system in accordance with the present invention, will now be primarily described.

Moreover there will be described further examples where the thermal energy accumulation process and the corresponding system, according to the invention, distinguish themselves non only by the presence of the above relevant constructional and structural elements, but also by the use of some innovative types of primary fluids, as in particular bitumen.

### Example 1

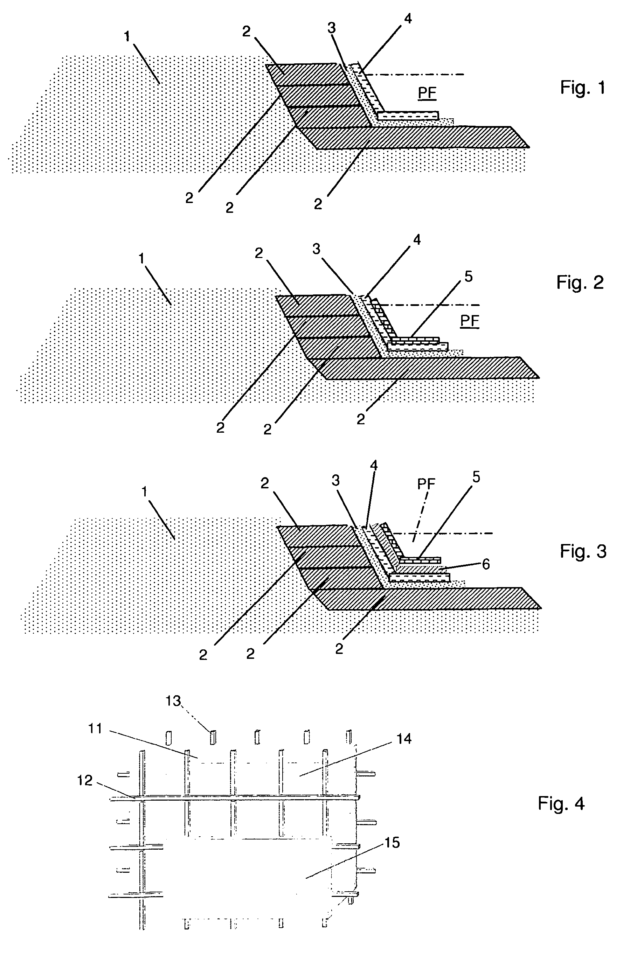

Fig. 1 schematically illustrates a geological/artificial barrier that is suitable for forming a tankless thermal energy accumulation section, i.e. one which does not include tanks, in particular metal, cisterns or similar containers, which are self-supporting, to store and tightly contain a fluid.

In detail, this geological/artificial barrier, hereinafter referred to more concisely as tankless accumulation or containment barrier, is made up of a bank and base in clay 1, onto which a plurality of layers of clay 2 are applied, appropriately pressed with a roller; a layer of anti-perforation geofabric, resistant to the maximum operating temperatures; a layer 3 of insulant of appropriate thickness; and a covering 4 with high density and low permeability.

### Example 2

Fig. 2 again schematically illustrates a geological/artificial tankless accumulation barrier, which has the same configuration as the previous one, shown in Fig. 1, with the exception of an additional upper layer 5, made up of elements with high thermal inertia, such as for example refractory bricks which are superimposed dry in one or more layers for the purpose of constructing a more efficient multi-layered barrier, in terms of material and thermal dispersion.

### Example 3

Fig. 3 in turn schematically illustrates another embodiment of a geological/artificial tankless accumulation barrier, which has the same composition as before, illustrated in Fig. 2, with the exception of an additional insulant layer 6 which is placed before the upper layer 5 constituted of elements with high thermal inertia, for the purpose of constructing a more efficient multi-layered barrier, in terms of material and thermal dispersion.

These geological/artificial tankless containment barriers can also be made up of alternating layers which are different to those stated previously, using materials with high thermal inertia in combination with materials of different porosity and density, loose or compact, to be selected on the basis of the type of primary fluid accumulated in the respective accumulation sections and on the basis of the maintenance time of this fluid in the range of design operating conditions.

### Example 4

Fig. 4 schematically illustrates an element 11, of material with high thermal inertia, which is used to construct a containment barrier of a tankless thermal energy accumulation section, wherein this element 11 is placed between two electrically welded nets which are in turn made up of horizontal 12 and vertical 13 metal wires and arc interconnected with orthogonal metal wires 14 with a length equal to or greater than 20 mm.

More specifically, these nets have square meshes with diagonals equal to or less than 300 mm, whereas the vertical, horizontal and orthogonal metal wires that make up and interconnect the two nets have a thickness equal to or greater than 2 mm, with breaking point ftk equal to or greater than 200 N/mm² and preferably greater than 500 N/mm².

This element 11, placed between the electrically welded nets, is preferably assembled, in a structure of containment of the primary heat-carrier fluid, so that it is in contact with at least one layer 15 of a heat-resistant and/or low hydraulic permeability material, such as heat-insulating cement or mortar, for the purpose of constructing an effective barrier against the dispersion of heat and the loss of fluid.

Among the materials exhibiting high thermal inertia, element 1 is made of, and the parts it can be formed of, mention is made, for example, of expanded polystyrene known as EPS, preferably with high density, or glass or rock wool, or panels with vermiculite, perlite or similar filler.

### Example 5

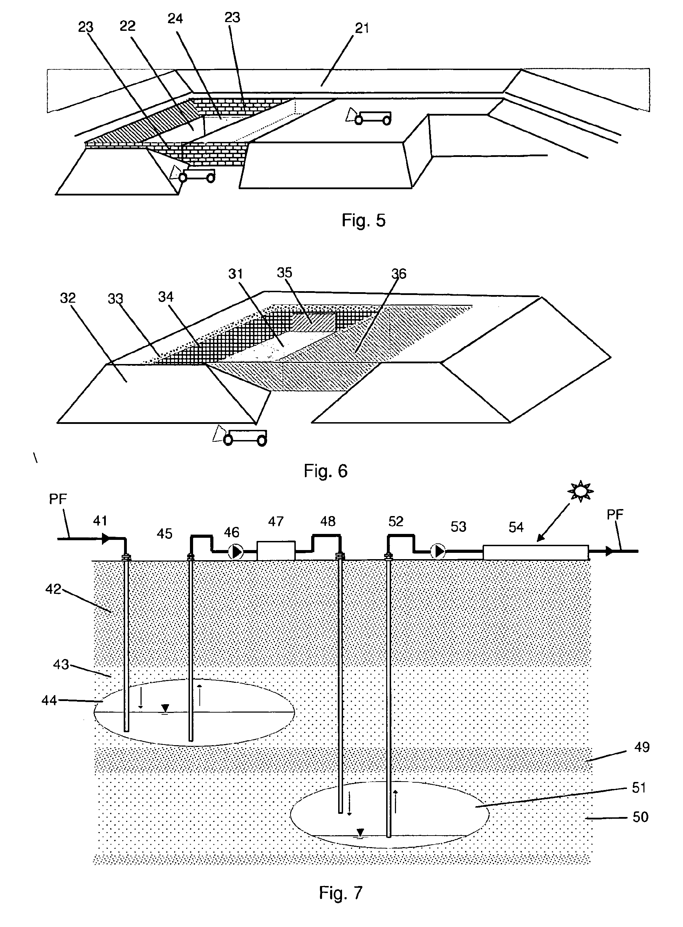

Fig. 5 schematically illustrates a phase of construction of a thermal energy storage, again of the tankless type, comprising a primary accumulation section 22 and a secondary accumulation section 23 of thermal energy, which are located in a quarry area, of rock salt for example, in the vicinity of the walls 21 of the quarry itself.

In this example, the primary 22 and secondary 23 thermal energy accumulation sections are bordered by respective side walls and a base, which in turn are constructed with bricks and/or in general with elements of refractory material, superimposed dry and in direct contact with the previously levelled rock salt ground and with the walls of the quarry.

Moreover, a covering 24 with high thermal inertia and density is applied to the internal surfaces of the accumulation sections, bordered by the elements of refractory material, such that this covering 24 constitutes, together with these elements of refractory material, a multi-layered barrier suitable for minimising both the dispersion of heat and the percolation of fluid towards the outside of the barrier.

Moreover, when constructing the accumulation sections the power shovels, normally used for the extraction of quarry material, can also be conveniently used to cover the accumulation sections with extracted rock salt, which is then suitably compacted with rollers for example.

In this way, once the thermal energy storage area has been finished it will be capable of confining the primary fluid inside the multi-layered barrier.

Depending on the dimensions of the quarry, the extraction of the rock salt can continue during and after the construction of the thermal energy storage area.

### Example 6

Fig. 6 is a schematic perspective view of epigeal thermal energy storage, in other words one that extends above the ground, which again is tankless and provided with containment banks in clay material.

The primary and secondary accumulation sections of this epigeal thermal energy storage are bordered by sides and by a base which are constructed with geological substrate material and/or elements with high thermal inertia, for the purpose of constructing a geological/artificial barrier suitable for minimising/eliminating heat and fluid dispersion.

The substrate of the geological barrier, which forms the base 31 and the side 32 of this thermal energy storage, consists of a natural geological formation with permeability and thickness at least equivalent to those defined and corresponding to the following requirements: hydraulic conductivity k ≤ 1 x 10-7 m/s with thickness ≥ 1 m, preferably hydraulic conductivity k ≤ 1 x 10-9 m/s with thickness ≥ 1 m, and more preferably hydraulic conductivity k ≤ 1 × 10-9 m/s with thickness ≥ 5 m.

If the geological barrier does not naturally meet the aforementioned requirements, it is completed artificially by means of a barrier or confinement system, such as to provide protection to the permeation of the primary fluid equivalent to that defined above, having a thickness not less than 0.05 m, preferably greater than 0.5 m.

The base and the walls are waterproofed with a covering of artificial material that is placed above the geological barrier, on a layer of compacted mineral material, in order to guarantee the tightness and maintain the temperature of the primary fluid for the entire time required.

This waterproof covering must have suitable features for resisting thermal, chemical and mechanical stress and is constructed, for example, with the assembly of elements 33 in material with high thermal inertia, which are placed inside the metal nets and covered with a heat-insulating cement mortar 35.

Covering 36 for the top of the thermal energy accumulation and storage sections can be constructed using a single-layer or multi-layered structure, preferably heat-insulating.

The base and sides of the epigeal storage are provided or not, depending on necessity, with geobarriers, geomesh, geotextiles, geogrids and drainage.

### Example 7

Fig. 7 illustrates an example of thermal energy accumulation and storage, according to the present invention, which is again tankless but hypogeal, in other words it extends below the ground, wherein the respective primary and secondary thermal energy accumulation sections are constructed in artificial cavities which are formed using the Frasch method in deep geological salt layers.

In particular, in the operation of this example the stream of the primary heat-carrier fluid PF coming from a heating subsystem 54, of the solar radiation type, is fed, via an inflow well 41 traversing a geological layer 42, to a primary hypogeal cavity of accumulation 44, in turn formed in a layer containing a saline formation 43 and situated above another layer 49.

In this way the primary fluid is accumulated inside the primary hypogeal cavity 44, during the hours, when there is solar radiation, in which the primary fluid is heated, to a selected maximum temperature, in order to guarantee the required plant operation hours, when solar radiation is absent, during which the primary fluid cannot be heated.

In particular the quantity of primary fluid to be accumulated in the primary hypogeal cavity of accumulation 44, during the hours when there is solar radiation, is determined by considering the selected flow rate for feeding the primary fluid to the mechanical/electrical energy generation section placed downstream from the primary hypogeal cavity 44, and also considering the quantity of primary fluid that can be accumulated in the various lines and pipes of plant and in a secondary hypogeal cavity 51 of accumulation of the same primary fluid.

The primary fluid PF is drawn and collected from the primary hypogeal cavity of accumutation 44, via an extraction well 45, by a pumping and collection system 46 which sends it to a heat exchange system or subsystem 47, wherein the primary fluid yields heat, then cools down, to a secondary fluid, having a temperature lower than that of the primary fluid and suitable for generating mechanical/electrical energy as part of a thermodynamic cycle.

From this heat exchange subsystem 47 the stream of primary fluid is fed, via an inflow well 48, to the secondary hypogeal cavity of accumulation 51, located in the same saline formation, for example, at a different depth with respect to the primary hypogeal cavity of accumulation 44.

The capacity of this secondary hypogeal cavity of accumulation 51, wherein the primary fluid PF is accumulated at a temperature lower than that at which it is accumulated in the primary cavity of accumulation 44, is preferably equivalent to the capacity of the primary cavity 44.

Finally the primary fluid PF collected from the secondary hypogeal cavity of accumulation 51, via an extraction well, by a pumping and collection system 52 which sends it to the solar radiation heating subsystem 54, from where the primary fluid PF is fed to the primary hypogeal cavity of accumulation 44, thus closing the cycle.

The flow rate of the salts in the circuit is regulated as a function of the intensity of the solar radiation such that a constant temperature of the primary fluid is maintained at the entrance in the hot primary cavity of accumulation.

### Example 8

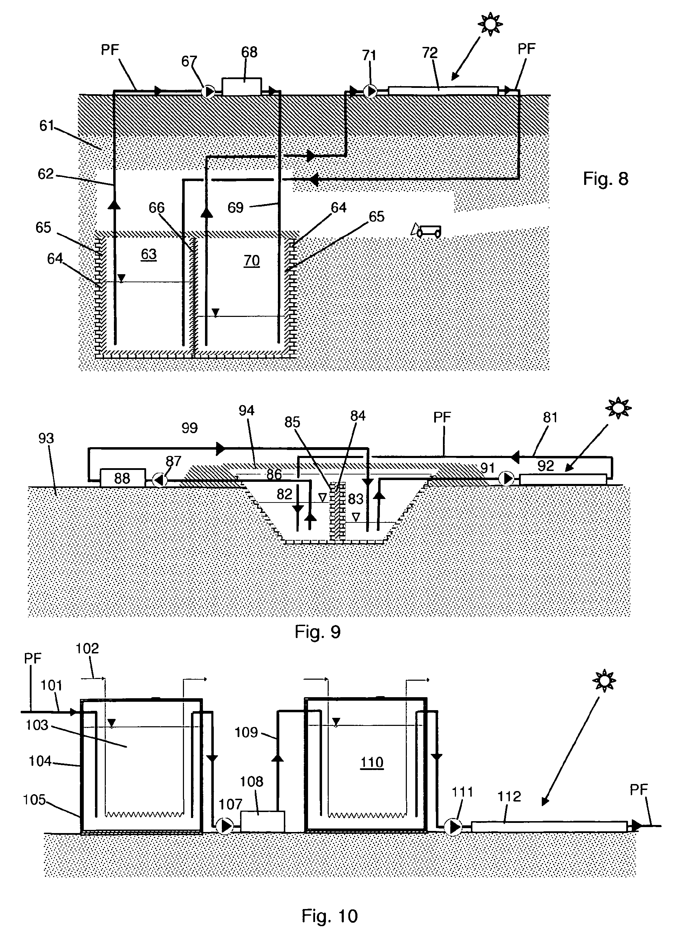

Fig. 8 illustrates an example of thermal energy accumulation and storage which is multi-barrier, hypogeal and again tankless and which is formed in a cavity, located under ground level, of a rock salt mine 61, and which uses a stream of a primary heat-carrier fluid PF, having approximately a flow rate of 300 kg/s and comprising a mixture of salts made up of 60% NaNO₃ and 40% KNO₃.

In operation, the stream of primary heat-carrier fluid PF, coming from a heating subsystem where the mixture of salts is heated by solar radiation, is fed at the selected maximum temperature, for example 550°C, to a primary accumulation section 63, located in the rock salt mine.

In this example too, the quantity of primary fluid PF to be accumulated in the primary accumulation section 63 at a higher temperature is equivalent to that, for example approximately 34,000 t, necessary for guaranteeing the required hours of operation for the section, placed downstream from the primary accumulation section, for the generation of electrical energy, while also considering the volume of fluid present in the lines of the plant in the calculation of this quantity to be accumulated.

The primary and secondary thermal energy accumulation sections are made up, for example, of a first wall made up of material 4 with high thermal inertia, such as refractory material and/or heat-insulating cement mortar, in which this wall is preferably covered, along the inner side, with a suitable material 5 with high density or with a metal laminate suitably shaped in order to compensate for thermal expansion.

The accumulation sections can be equipped with a manhole, placed on the cover over the top of these same sections, in order to allow their inspection.

In operation, the stream of primary fluid PF, fed by the primary fluid accumulated in the primary accumulation section 63, is is drawn by a pumping and collection system 67 which sends it to a heat exchange and electrical energy generation subsystem 68, where the stream of primary fluid transfers heat that is used to produce approximately 50 MWe, via a superheated steam Rankine cycle, having efficiency equivalent to 42.2%.

Then, from the beat exchange and electrical energy generation subsystem 68, the stream of fluid is fed, via the inflow line 69, to a secondary accumulation section 70 at a lower temperature, for example 290°C, with respect to that of the primary accumulation section 63, and having capacity equivalent to the capacity of the primary section.

The two primary and secondary accumulation sections, respectively 63 and 70, are adjacent and separated by a bulkhead 66, made of material with low thermal conductivity and such that it guarantees the tightness of the fluid.

The secondary accumulation section, at a lower temperature, can be dimensioned for a primary fluid accumulation volume that is lower with respect to that of the primary accumulation section, given that the density of the primary fluid is greater when it is accumulated in the secondary accumulation chamber (approximately 1.9 kg/l against 1.7 kg/l), in the range of the expected temperatures.

Finally the stream of primary fluid, coming from the secondary hypogeal a cumulation section, is fed, via the pumping and extraction subsystem 71, to the heating subsystem 72 operating by solar radiation, thus closing the cycle.

This thernial energy storage system is also equipped with one or more process control stations, suitable for monitoring and regulating operational parameters in the plant startup, running and shutdown phases, and is also equipped with systems of electrical interconnection with internal/external electrical loads to the same plant and/or to the external electricity system.

The pipes and solar radiation capture system are monitored continuously.

According to a variant of the thermal energy accumulation system with respect to that described previously, the primary and secondary accumulation sections can be conveniently formed in two different cavities situated in different locations of the rock salt mine.

For completeness of information, Table 1 below provides a series of details relating to this example of thermal energy storage, regarding in particular the operational and functional features of the primary fluid, such as for example its flow rate at the entrance and exit of the hypogeal accumulation sections and the features of the mass of salts, of which the primary fluid is formed, circulating in the plant.

**Table 1 - Salt Mixture: NaNO₃-KNO₃ (60 40)**

| *Features* | Units | | |
|---|---|---|---|
| *Electrical power* | [MWe] | 50.0 | |
| *Thermal power* | [MWth] | 1186 | |
| *Plant electrical efficiency* | [%] | 42.2 | |

| Tankless hypogeal section | | Primary | Secondary |
|---|---|---|---|
| *Mean temperature* | [°C] | 550 | 290 |
| *Maximum inflow rate* | [kg/s] | 1008.8 | 300.0 |
| *Maximum outflow rate* | [kg/s] | 300.0 | 1008.8 |
| *Accumulation volume* | [m³] | 20494.6 | 19559.6 |
| *Salts volume at mean temp.* | [m³] | 19518.7 | 17781.4 |
| *Current salts mixture density* | [kg/l] | 1.7 | 1.9 |
| *Circulating molten salts mass* | [t] | 33962.5 | 33962.5 |
| *Mean salts mixture Cp* | (kJ/kgk) | 1.52 | |
| *Useful thermal gradient* | [°C] | 260 | |

### Example 9

Figure 9 shows a further example of a thermal energy storage structure, again of the tankless type but semi-hypogeal, which comprises primary and secondary accumulation sections, respectively 82 and 83, for the accumulation of a primary heat-carrier fluid, which are placed m a covered multi-barrier vessel, wherein a stream 81 formed by the primary heat-carrier fluid PF and coming from a heatmg subsystem 92, where the primary fluid is heated by solar radiation, is fed, at the selected maximum temperature, to the primary accumulation sections 82 of the primary fluid.

In particular this primary accumulation section 82 is constructed in a semi-hypogeal tank, such as for example a decommissioned quarry and/or other anthropical depression or not, which is situated in a geological layer 93 made up of cohesive material with homogeneous matrix, such as for example clay, tufa, rock salt

The secondary accumulation section 83, at a temperature lower than that of the primary accumulation section 82, is separated from the latter by a multi-layered bulkhead that is suitable for preventing/reducing heat transfer between the two primary and secondary accumulation sections, and to this end uses a material 4 with high thermal inertia and low porosity, such as for example panels in EPS and/or glass wool reinforced with metal net and heat-insulating plaster, inserted between additional layers formed, for example, with refractory bricks 85.

The quantity of primary fluid that can be accumulated in the primary section at higher temperature is equivalent to the quantity necessary for guaranteeing the required hours of operation of the section downstream suitable for the generation of energy and incremented by the quantity of fluid present in the lines of the plant.

The pit, i.e. the hypogeal depression, is formed in a suitable geological surface layer and is bordered for example by a wall made up of panels, which is insulated, or rather does not have direct contact with the primary fluid, by means of a physical plaster that covers it and is suitable for the tightness for the primary fluid.

A cover 94 can be made from EPS panels, structured and covered with the same material with which the thermal energy storage structure was formed.

Still the structure can be equipped with inspection manholes or monitored with suitable sensors connected to a receiving station.

The stream 84 of primary fluid PF, fed from the primary fluid accumulated in the primary section 82, is activated by the pumping and collection system 87 which sends it to the energy generation and heat exchange subsystem 88, where the primary fluid transfers heat and thereby cools down.

Then the stream of primary fluid is sent from this electrical energy generation and heat exchange subsystems 88, via the inflow line 89, to the secondary accumulation section 83, at a lower temperature, adjacent to the primary accumulation section 82 and situated for example in a side area of the hypogeal depression.

Successively the stream of primary fluid PF, coming from the secondary accumulation section 83, is fed by the pumping and extraction subsystem 91 to the subsystem 92 of heating by solar radiation, thus closing the cycle.

Only when the pumping and collection systems 87 and 91 induce a same flow rate and also a same collection of primary fluid, respectively from the primary accumulation section 82 and from the secondary accumulation section 3, do the levels of primary heat-carrier fluid remain at a constant height with respect to the base, in the primary 82 and secondary 83 accumulation sections, whereas in the opposite case there will be different levels of primary fluid, which appropriate regulation systems will restore to equilibrium.

### Example 10

Fig. 10 illustrates an example of thermal energy accumulation and storage, wherein the primary and secondary thermal energy accumulation sections are both epigeal and use bitumen as the primary fluid.

The type of thermal energy accumulation and storage, corresponding to this example, conveniently permits the planning and combination of different accumulation sections, primary and secondary, of the primary heat-carrier fluid used.

In operation, the stream 101 of the primary heat-carrier fluid, which is made up of an organic mixture rich in oxidised bitumens and having a flash point higher than 200°C, is fed, via corresponding feeding means such as pumps or similar apparatus, at the selected maximum temperature, for example 280°C, from the heating subsystem 112 where the stream 101 receives heat and is heated by solar radiation, to the primary epigeal accumulation section 103.

Also in this example, the quantity of primary fluid that is accumulated in the primary accumulation section 103 at higher temperature is determined and calculated such as to guarantee the approximately eight hours of operation required for the generation of mechanical/electrical energy in the absence of solar radiation, by also considering in this calculation the quantity of primary fluid that is present in the lines of the plant.

The stream 101 of primary fluid is then drawn from the primary accumulation section 103 by means of the pumping and collection system 107 which sends it to the energy generation and heat exchange subsystem 108, where the stream 101 of primary fluid PF yields heat to the secondary fluid.

Then from the heat exchange subsystem 108 the stream 101 is fed, via the inflow line 109, to the secondary accumulation section 110, at a lower temperature, for example 120°C, with respect to that of the primary accumulation section 103, and having an accumulation capacity equivalent to that of the primary section.

Finally the stream 101 of primary fluid PF is drawn and fed, via the pumping and extraction subsystem 111, from the secondary accumulation section 110 to the solar radiation heating subsystem 112, thus closing the cycle.

The primary and secondary accumulation sections can be equipped with suitable heat exchangers 102 and apparatus for blanketing with inert gas.

Moreover, the accumulation sections are constructed using a wall 105, of carbon steel, insulated from the exterior by means of a layer of rock wool 104, having thickness greater than 50 mm, or using another suitable material with high thermal inertia and appropriate thickness placed internally and/or externally, suitable for guaranteeing the maintenance of the mean temperatures of the fluid in the design temperature range for the prefixed time period.

The carbon steel walls are covered internally with aluminium or galvanised steel having a thickness greater than 0.7 mm.

Moreover, the two primary and secondary accumulation sections are equipped with inspection manholes and access ramps.

### Example 11

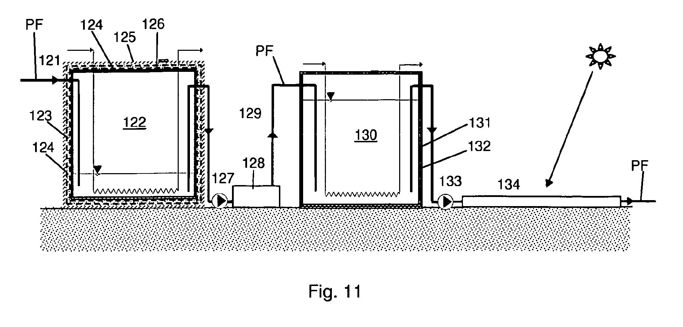

Figure 11 illustrates another example of thermal energy storage that comprises a tankless epigeal multi-barrier primary accumulation section and a traditional secondary accumulation section, in which bitumen is used as the primary fluid PF.

This example of thermal energy storage can be advantageously implemented in order to transform a traditional bitumen storage cistern into a secondary accumulation section, thereby creating a really innovative primary accumulation section, in the context of a plant or system intended for producing mechanical/electrical energy from solar radiation.

In operation, a stream 121 of a primary heat-carrier fluid PF, which has an approximate flow rate of 136.2 kg/s and is made up of an organic mixture, rich in oxidised bitumens, having a flash point higher than 200°C, is fed at the maximum selected temperature, for example 280°C, by a heating subsystem 14, where the mixture has been suitably heated by solar radiation, to a tankless epigeal primary accumulation section 122.

The primary accumulation section 122 is constructed by assembling elements 123, with high thermal inertia, and is such that it constructs a multilayered barrier suitable for the tight containment of the primary fluid and maintenance of the temperature over time.

These elements 123 are made up of panels with high thermal inertia placed between two electrically welded nets 124, which have in turn been constructed with horizontal and vertical metal wires and interconnected by galvanised or stainless steel orthogonal wires, having a length greater than 30 mm.

In particular the electrically welded nets, used in making these elements 3, have square meshes with diagonals less than 300 mm.

The vertical, horizontal and orthogonal wires forming and interconnecting these electrically welded nets have a thickness greater than 3 mm, with breaking point ftk equal to or greater than 500 N/mm².

The multi-layered barrier of the primary accumulation section 122 is formed by further covering the external side 125 and the internal side 126, exposed to the primary heat-carrier fluid, of these elements 123, with high thermal inertia, with a layer of heat-insulating cement mortar of suitable thickness and low hydraulic permeability.

Again, the external surface of this thankless primary accumulation section 122 can be usefully covered with suitable material, for example polymeric, with very low permeability and/or heat resistant.

As in the previous examples, the quantity of primary heat-carrier fluid PF accumulated in the primary accumulation section 122, at a higher temperature, corresponds to that necessary for guaranteeing eight hours of regular operation, despite the absence of solar radiation, of the heat exchange section where the primary fluid PF transfers its heat in order to generate mechanical/electrical energy, by also considering, when determining and calculating this quantity of primary fluid to be accumulated in the primary accumulation section 122, the quantity of primary fluid present in the lines of the plant.

In operation, the stream of primary fluid PF, fed from the primary fluid accumulated in the primary accumulation section 122, is activated by a pumping and collection system 127 which feeds it to a heat exchange subsystem 128, where the primary heat-carrier fluid yields its heat, and therefore cools down, in order to produce approximately 9.5 MWe, with efficiency equivalent to 21%, via an organic Rankine cycle.

From this heat exchange subsystem 128 the stream of primary fluid PF is fed, at a temperature equivalent to approximately 120°C, along an inflow line 129 and again under the action of the pumping and collection system 127 to a secondary accumulation section 130 having capacity equivalent to that of the primary accumulation section 122.

This epigeal secondary accumulation system 130, wherein the primary fluid has a lower temperature with respect to that of the epigeal primary accumulation chamber 122, is instead constructed traditionally and with traditional technology, and in particular is made up of a standard tank with containment walls 131 of carbon steel, wherein this tank is covered externally with a layer of rock wool 132 having a thickness greater than 50 mm, or with other appropriate heat-insulating material suitable for guaranteeing the maintaining of the temperature of the primary fluid, accumulated in the secondary accumulation section 130, during the fixed time period.

Moreover the internal walls of this secondary accumulation section 130 are covered with a sheet of aluminium or galvanised steel having a thickness greater than 0.7 mm.

Similarly to the previous examples, the stream of primary fluid PF is fed, via the pumping and extraction subsystem 133, from the secondary accumulation section 130 to the heating subsystem 134, where the primary heat-carrier fluid receives heat and then heats up due to the effect of solar radiation, thus closing the cycle.

The accumulation sections can be equipped with one or more heat exchangers, and also inert gas expansion vessels with the function of compensating for thermal expansions and contractions of the primary fluid contained and accumulated in the accumulation sections.

Here too, for completeness of information, Table 2 below provides a series of characteristic data of this last example of thermal energy accumulation and storage, using, as primary heat-carrier fluid, an organic bitumen mixture.

**Table 2 (organic bitumen mixture)**

| *Features* | Units | | |
|---|---|---|---|
| *Electrical power* | [MWe] | 9.5 | |
| *Thermal power* | [MWth] | 45.5 | |
| *Plant electrical efficiency* | [%] | 21 | |

| *Epigeal accumulation section* | | Primary | Secondary |
|---|---|---|---|
| *Mean temperature* | [°C] | 280 | 120 |
| *Maximum inflow rate* | [kg/s] | 457 | 136.2 |
| *Maximum outflow rate* | [kg/s] | 136.2 | 457 |
| *Accumulation volume* | [m³] | 6050 | 6400 |
| *Fluid volume at mean temp.* | [m³] | 5500 | 6090 |
| *Current mixture density* | [kg/l] | 0.89 | 0.805 |
| *Mixture accumulation mass* | [t] | 3930 | 3930 |
| *Mixture Cp* | (kJ/kgk) | 1.84 | 2.30 |
| *Useful thermal gradient* | [°C] | 160 | |

It also appears evident that further examples, variants, improvements, modifications and also different methods of application and use of the process and corresponding system for accumulating thermal energy, according to the present invention, can be implemented and developed further by persons skilled in the art, without departing from the scope and sphere of the invention itself, as defined by the respective claims.

## Claims

1. System for the accumulation of thermal energy of the type using at least one primary heat-carrier fluid (PF) suitable for exchanging heat with a secondary fluid in order to heat it, wherein said system is configured for performing the following steps:
a) accumulation of said at least one primary heat-carrier fluid (PF) in a secondary accumulation section of a plant, at a lower mean temperature with respect to that of a primary accumulation section of the same plant, said primary and secondary accumulation sections of the plant being made up of one or more collection and accumulation subsystems of said primary fluid (PF),
b) collection of said primary fluid (PF) from said secondary accumulation section and its feeding to one or more heating subsections associated with one or more heat sources and having a temperature higher than that of said primary fluid (PF), wherein the thermal energy supplied to said primary fluid from said heating subsections has a discontinuous and/or variable course, as in particular when the heat source consists of solar radiation;
c) heating of said primary fluid (PF) in said one or more heating subsections;
d) feeding from one or more said heating subsections and accumulation of said primary fluid (PF), at the selected temperature, in said primary accumulation section;
e) collection from said primary accumulation section of said primary fluid (PF), previously heated, and its feeding to a heat exchange section suitable for carrying out heat exchange between said primary fluid (PF) and a secondary fluid at a temperature lower than that of said primary fluid, in particular as part of a thermodynamic cycle suitable for generating mechanical/electrical energy from the heat transferred through said heat exchange, with resulting cooling of said primary fluid and simultaneous increase of the temperature of said secondary fluid to the conditions required by said thermodynamic cycle; and
f) collection of said primary fluid (PF), cooled, from said heat exchange section and its feeding to said secondary accumulation section, thus closing the cycle and therefore making said fluid available again, in said secondary accumulation section, to be fed to said one or more heating subsections and then heated again,
wherein at least one of said one or more collection and accumulation subsystems, constituting the primary and secondary accumulation sections of said primary fluid (PF), is of the tankless type, that is it is constructed without the use of self-supporting metal tanks, mechanically resistant to operating temperatures and suitable for the tight containment of said primary fluid,
the system being **characterized in that** at least one of said collection and accumulation subsystems, of the tankless type, extends on the ground, that is it is partially hypogeal or epigeal,
wherein the containment surfaces of the primary or secondary accumulation sections, of this collection and accumulation subsystem of the tankless type, are made up of geological and/or artificial barriers containing material with high thermal inertia, and
wherein said geological and/or artificial barriers in turn are made up of a bank and base, onto which a plurality of layers (2) are applied, appropriately pressed.

2. System according to claim 1, wherein said bank and base and said plurality of layers (2) applied onto them are in clay, and wherein said geological and/or artificial barriers further comprise a layer of anti-perforation geofabric, resistant to the maximum operating temperatures; a layer (3) of insulant of appropriate thickness; and a covering (4) with high density and low permeability.

3. System according to claim 2, wherein said geological and/or artificial barriers further comprise an additional upper layer (5) made up of refractory bricks.

4. System according to any one of the previous claims, wherein said material with high thermal inertia is **characterised by** a heat transfer coefficient, at the operating temperature, less than or equal to 25 W/mK, preferably less than 5 W/mK, and more preferably less than 0.5 W/mK.

5. System according to any one of claims 1 to 3, wherein said material with high thermal inertia is placed between two electrically welded nets comprising horizontal and vertical metal wires.

6. System according to claim 5, wherein said two electrically welded nets are interconnected one in respect of the other with orthogonal metal wires having a length equal to or greater than 20 mm,
wherein the meshes of said two nets are square with diagonals equal to or less than 300 m, and
wherein said vertical, horizontal and orthogonal wires forming and interconnecting said electrically welded nets have a thickness equal to or greater than 2 mm, with breaking point ftk equal to or greater than 200 N/mm² and preferably greater than 500 N/mm².

7. System according to any one of the previous claims, wherein said primary and secondary accumulation sections are equipped with geomeshes and/or geotextiles and/or geogrids and/or drainage.

8. System according to any one of the previous claims, wherein the primary fluid used is of the type containing liquid organic mixtures that include components with a number of carbon atoms equal to or greater than 7 and preferably greater than 9, and/or have an initial boiling temperature at atmospheric pressure equal to or higher than 98°C, and preferably higher than 150°C, these primary fluid being additivated or not.

9. System according to any one of claims 1 to 7, wherein the primary fluid used has high contents of aromatic and/or cyclic hydrocarbons and preferably aromatic polycyclic and/or polynuclear, in particular belonging to the class of bitumens and their derivatives, oxidised or not, said primary fluid being additivated or not.

10. System according to any one of claims 1 to 7, wherein the primary fluid used is of the organic type containing molten salts and in particular molten salts constituting eutectics, and more particularly eutectic mixture comprising 60% sodium nitrate and 40% potassium nitrate.

11. System according to any one of claims 1 to 7, wherein the primary fluid used is inorganic and contains low melting alloys or mineral oils, or molten salts of K or Li or Na or Mg or their mixtures, and in particular LiNO₃, LiNO₃-NaNO₃, KNO3-LiNO₃, KNO₃-NaNO₂-NaNO₃, NaNO₂, NaNO₃, KNO₃, KNO₃-NaNO₃ and more particularly the mixture NaNO₃ at 60% and KNO₃ at 40%.

12. Process to accumulate thermal energy with the respective claimed process steps using and being those included in a system according to any one of claims 1 to 11.

## Patentansprüche

1. System für die Akkumulation von thermischer Energie des Typs, bei dem mindestens ein primäres Wärmeträgerfluid (PF) verwendet wird, das zum Wärmeaustausch mit einem sekundären Fluid geeignet ist, um dieses zu erwärmen, wobei das System zur Durchführung der folgenden Schritte konfiguriert ist:
a) Akkumulation des mindestens einen primären Wärmeträgerfluids (PF) in einer sekundären Akkumulationssektion einer Anlage, bei einer niedrigeren mittleren Temperatur bezogen auf diejenige einer primären Akkumulationssektion der Anlage, wobei die primären und sekundären Akkumulationssektionen der Anlage aus einem oder mehreren Sammel- und Akkumulationssubsystemen des primären Fluids hergestellt sind,
b) Sammeln des primären Fluids (PF) aus der sekundären Akkumulationssektion und dessen Zuführung zu einer oder mehreren Heizsubsektionen, die mit einer oder mehreren Wärmequellen verbunden sind und eine Temperatur aufweisen, die höher ist als die des primären Fluids (PF), wobei die thermische Energie, die dem primären Fluid aus den Heizsubsektionen zugeführt wird, einen diskontinuierlichen und/oder variablen Verlauf aufweist, insbesondere wenn die Wärmequelle aus Sonnenstrahlung besteht;
c) Erwärmen des primären Fluids (PF) in der einen oder den mehreren Heizsubsektionen;
d) Zuführen und Akkumulation des primären Fluids (PF) aus einer oder mehreren der Heizsubsektionen, bei der ausgewählten Temperatur, in die primäre Akkumulationssektion;
e) Sammeln des zuvor erwärmten primären Fluids (PF) aus der primären Akkumulationssektion und dessen Zuführung zu einer Wärmeaustauschsektion, die zum Ausführen eines Wärmeaustauschs zwischen dem primären Fluid (PF) und einem sekundären Fluid bei einer Temperatur, die niedriger ist als diejenige des primären Fluids, geeignet ist, insbesondere als Teil eines thermodynamischen Kreislaufs, der geeignet ist, aus der Wärme, die durch den Wärmeaustausch übertragen wird, mechanische/elektrische Energie zu erzeugen, mit dem Ergebnis, dass das primäre Fluid gekühlt wird und gleichzeitig die Temperatur des sekundären Fluids erhöht wird, zu den Bedingungen, die durch den thermodynamischen Kreislauf erforderlich sind; und
f) Sammeln des gekühlten primären Fluids (PF) aus der Heizaustauschsektion und dessen Zuführung zu der sekundären Akkumulationssektion, wodurch der Kreislauf geschlossen wird und daher das Fluid in der sekundären Akkumulationssektion wieder verfügbar gemacht wird, um einer oder mehreren der Heizsubsektionen zugeführt und wiederum erwärmt zu werden,
wobei mindestens eines der einen oder mehreren Sammel- und Akkumulationssubsysteme, welche die primären und sekundären Akkumulationssektionen des primären Fluids (PF) bilden, vom tanklosen Typ ist, das heißt, es ist ohne die Verwendung von selbsttragenden Metalltanks gebildet, gegenüber den Betriebstemperaturen mechanisch resistent und zum dichten Containment des primären Fluids geeignet,
wobei das System **dadurch gekennzeichnet ist, dass** mindestens eines der Sammel- und Akkumulationssubsysteme des tanklosen Typs sich bis zum Boden erstreckt, das heißt, es ist teilweise hypogäisch oder epigäisch,
wobei die Containment-Oberflächen der primären oder sekundären Akkumulationssektionen dieses Kollektions- und Akkumulationssubsystems des tanklosen Typs aus geologischen und/oder künstlichen Barrieren hergestellt sind, die Material mit hoher thermischer Trägheit enthalten, und
wobei die geologischen und/oder künstlichen Barrieren wiederum aus einer Bank und Basis hergestellt sind, auf die eine Mehrzahl von Schichten (2) aufgebracht sind, die in geeigneter Weise gepresst werden.

2. System nach Anspruch 1, wobei die Bank und Basis und die Mehrzahl von Schichten (2), die darauf aufgebracht sind, in Lehm sind, und wobei die geologischen und/oder künstlichen Barrieren darüber hinaus eine Schicht durchtrittsicheres Material mit Geostruktur umfasst, das gegenüber den höchsten Betriebstemperaturen resistent ist; eine Schicht (3) eines Isolierungsmittels geeigneter Dicke; und eine Abdeckung (4) mit hoher Dichte und geringer Permeabilität.

3. System nach Anspruch 2, wobei die geologischen und/oder künstlichen Barrieren darüber hinaus eine zusätzliche obere Schicht (5) umfassen, die aus feuerfesten Ziegeln hergestellt ist.

4. System nach einem der vorhergehenden Ansprüche, wobei das Material mit hoher thermischer Trägheit bei der Betriebstemperatur durch einen Wärmeübertragungskoeffizienten von weniger als oder gleich 25 W/mK, vorzugsweise weniger als 5 W/mK, und noch bevorzugter weniger als 0,5 W/mK charakterisiert ist.

5. System nach einem der Ansprüche 1 bis 3, wobei das Material mit hoher thermischer Trägheit zwischen zwei elektrisch verschweißten Netzen, die horizontale und vertikale Metalldrähte umfassen, angeordnet ist.

6. System nach Anspruch 5, wobei die zwei elektrisch verschweißten Netze mit orthogonalen Metalldrähten miteinander verbunden sind, die eine Länge von gleich oder größer als 20 mm aufweisen,
wobei die Maschen der beiden Netze rechtwinklig sind, mit Diagonalen von gleich oder weniger als 300 m, und
wobei die vertikalen, horizontalen und orthogonalen Drähte, die die elektrisch verschweißten Netze bilden und miteinander verbinden, eine Dicke von gleich oder größer als 2 mm aufweisen, mit einer Bruchgrenze ftk von gleich oder größer als 200 N/mm² und vorzugsweise größer als 500 N/mm².

7. System nach einem der vorhergehenden Ansprüche, wobei die primären und sekundären Akkumulationssektionen mit Geomaschen und/oder Geotextilien und/oder Geogittern und/oder Drainage ausgestattet sind.

8. System nach einem der vorhergehenden Ansprüche, wobei das verwendete primäre Fluid eines der Art ist, das flüssige organische Mischungen enthält, die Komponenten mit einer Anzahl von Kohlenstoffatomen umfassen, welche gleich oder größer als 7 und vorzugsweise größer als 9 ist und/oder bei Atmosphärendruck eine anfängliche Siedetemperatur aufweisen, die gleich oder höher als 98°C und vorzugsweise höher als 150°C ist, wobei diese primären Fluids Zusätze aufweisen können oder nicht.

9. System nach einem der Ansprüche 1 bis 7, wobei das verwendete primäre Fluid einen hohen Gehalt an aromatischen und/oder zyklischen Kohlenwasserstoffen und vorzugsweise aromatischen Polyzyklen und oder Polynuklearen aufweist, die insbesondere zur Klasse von Bitumen und deren Derivaten gehören, die oxidiert oder nicht oxidiert sein können, wobei das primäre Fluid Zusätze aufweisen kann oder nicht.

10. System nach einem der Ansprüche 1 bis 7, wobei das verwendete primäre Fluid organischen Typs ist, das geschmolzene Salze und insbesondere geschmolzene Salze, welche Eutektika bilden und ganz besonders eutektische Gemische, die 60% Natriumnitrat und 40% Kaliumnitrat umfassen, enthält.

11. System nach einem der Ansprüche 1 bis 7, wobei das verwendete primäre Fluid anorganisch ist und niedrigschmelzende Legierungen oder Mineralöle enthält oder geschmolzene Salze von K oder Li oder Na oder Mg oder deren Gemische, und insbesondere von LiNO₃, LiNO₃-NaNO₃, KNO₃-LiNO₃, KNO₃-NaNO₂-NaNO₃, NaNO₂, NaNO₃, KNO₃, KNO₃-NaNO₃ und insbesondere das Gemisch NaNO₃ mit 60% und KNO₃ mit 40%.

12. Verfahren zum Akkumulieren thermischer Energie mit den entsprechenden beanspruchten Verfahrensschritten, welche diejenigen sind, die in einem System nach einem der Ansprüche 1 bis 11 verwendet werden und enthalten sind.

## Revendications

1. Système pour l'accumulation d'énergie thermique du type utilisant au moins un fluide caloporteur primaire (PF) convenant à un échange de chaleur avec un fluide secondaire afin de le chauffer, dans lequel ledit système est configuré de façon à réaliser les étapes suivantes :
a) l'accumulation dudit au moins un fluide caloporteur primaire (PF) dans une section d'accumulation secondaire d'une usine, à une température moyenne inférieure à celle d'une section d'accumulation primaire de la même usine, lesdites sections d'accumulation primaires et secondaires de l'usine étant constituées d'un ou de plusieurs sous-systèmes de récupération et d'accumulation dudit fluide primaire (PF),
b) la récupération dudit fluide primaire (PF) de ladite section d'accumulation secondaire et son alimentation dans une ou plusieurs sous-sections de chauffage associées à une ou plusieurs sources de chaleur et ayant une température supérieure à celle dudit fluide primaire (PF), où l'énergie thermique fournie audit fluide primaire provenant desdites sous-sections de chauffage a une progression discontinue et/ou variable comme, en particulier, lorsque la source de chaleur est constituée d'un rayonnement solaire ;
c) le chauffage dudit fluide primaire (PF) dans lesdites une ou plusieurs sous-sections de chauffage ;
d) l'alimentation à partir desdites une ou plusieurs sous-sections de chauffage et l'accumulation dudit fluide primaire (PF), à la température choisie, dans ladite section d'accumulation primaire ;
e) la récupération depuis ladite section d'accumulation primaire dudit fluide primaire (PF), précédemment chauffé, et son alimentation dans une section d'échange de chaleur pour réaliser un échange de chaleur entre ledit fluide primaire (PF) et un fluide secondaire à une température inférieure à celle dudit fluide primaire, en particulier comme partie d'un cycle thermodynamique convenant à la production d'énergie mécanique/électrique à partir la chaleur transférée par ledit échange de chaleur, avec un refroidissement résultant dudit fluide primaire et l'augmentation simultanée de la température dudit fluide secondaire aux conditions nécessaires audit cycle thermodynamique ; et
f) la récupération dudit fluide primaire (PF), refroidi, de ladite section d'échange de chaleur et son alimentation dans ladite section d'accumulation secondaire, clôturant ainsi le cycle et, par conséquent, rendant ledit fluide de nouveau disponible, dans ladite section d'accumulation secondaire, pour une alimentation dans lesdites une ou plusieurs sous-sections de chauffage et ensuite pour un nouveau chauffage,
dans lequel l'un au moins desdits un ou plusieurs sous-systèmes de récupération et d'accumulation, constituant les sections d'accumulation primaires et secondaires dudit fluide primaire (PF), est du type sans réservoir, c'est-à-dire qu'il est construit sans utiliser de réservoirs métalliques autoportés, résistant mécaniquement aux températures opératoires et convenant à un confinement hermétique dudit fluide primaire,
le système étant **caractérisé en ce que** l'un au moins desdits sous-systèmes de récupération et d'accumulation du type sans réservoir s'étend sur le sol, qui est partiellement hypogé ou épigé,
dans lequel les surfaces de confinement des sections d'accumulation primaires ou secondaires de ce sous-système de récupération et d'accumulation du type sans réservoir sont constituées de barrières géologiques et/ou artificielles contenant un matériau présentant une inertie thermique élevée, et
dans lequel lesdites barrières géologiques et/ou artificielles sont à leur tour constituées d'un talus et d'une base, sur lesquels une pluralité de couches (2) sont appliquées, convenablement comprimées.

2. Système selon la revendication 1, dans lequel ledit talus et ladite base et ladite pluralité de couches (2) appliquées sur ceux-ci sont en argile et dans lequel lesdites barrières géologiques et/ou artificielles comprennent en outre une couche de géo-tissu anti-perforation, résistant aux températures opératoires maximales ; une couche (3) d'un isolant d'une épaisseur appropriée ; et une couverture (4) ayant une masse volumique élevée et une faible perméabilité.

3. Système selon la revendication 2, dans lequel lesdites barrières géologiques et/ou artificielles comprennent en outre une couche supérieure supplémentaire (5) constituée de briques réfractaires.

4. Système selon l'une quelconque des revendications précédentes, dans lequel ledit matériau présentant une énergie thermique élevée est **caractérisé par** un coefficient de transfert de chaleur, à la température opératoire, inférieur ou égal à 25 W/mK, de préférence inférieur à 5 W/mK, et mieux encore inférieur à 0,5 W/mK.

5. Système selon l'une quelconque des revendications 1 à 3, dans lequel ledit matériau présentant une énergie thermique élevée est placé entre deux toiles soudées électriquement comprenant des fils métalliques horizontaux et verticaux.

6. Système selon la revendication 5, dans lequel lesdites deux toiles soudées électriquement sont interconnectées l'une par rapport à l'autre avec des fils métalliques orthogonaux ayant une longueur supérieure ou égale à 20 mm,
dans lequel les mailles des deux toiles sont carrées avec des diagonales inférieures ou égales à 300 m, et
dans lequel lesdits fils verticaux, horizontaux et orthogonaux formant et interconnectant lesdites toiles soudées électriquement ont une épaisseur supérieure ou égale à 2 mm, le point de rupture ftk étant supérieur ou égal à 200 N/mm² et de préférence supérieur à 500 N/mm².

7. Système selon l'une quelconque des revendications précédentes, dans lequel lesdites sections d'accumulation primaires et secondaires sont équipées de géo-tamis et/ou de géo-textiles et/ou de géo-grilles et/ou d'un drainage.

8. Système selon l'une quelconque des revendications précédentes, dans lequel le fluide primaire utilisé est du type contenant des mélanges organiques liquides qui comprennent des composants ayant un nombre d'atomes de carbone supérieur ou égal à 7 et de préférence supérieur à 9, et/ou qui ont une température d'ébullition initiale à la pression atmosphérique supérieure ou égale à 98°C et de préférence supérieure à 150°C, ces fluides primaires comprenant ou non des additifs.

9. Système selon l'une quelconque des revendications 1 à 7, dans lequel le fluide primaire utilisé a une forte teneur en hydrocarbures aromatiques et/ou cycliques et de préférence en hydrocarbures aromatiques polycycliques et/ou polynucléaires, en particulier appartenant à la catégorie des bitumes et de leurs dérivés, oxydés ou non, ledit fluide primaire comprenant ou non des additifs.

10. Système selon l'une quelconque des revendications 1 à 7, dans lequel le fluide primaire utilisé est du type organique contenant des sels fondus et en particulier des sels fondus constituant des eutectiques, et plus particulièrement un mélange eutectique comprenant 60 % de nitrate de sodium et 40 % de nitrate de potassium.

11. Système selon l'une quelconque des revendications 1 à 7, dans lequel le fluide primaire utilisé est minéral et contient des alliages ou des huiles minérales à bas point de fusion, ou des sels fondus de K ou de Li ou de Na ou de Mg ou de leurs mélanges, et en particulier LiNO₃, LiNO₃-NaNO₃, KNO₃-LiNO₃, KNO₃-NaNO₂-NaNO₃, NaNO₂, NaNO₃, KNO₃, KNO₃-NaNO₃ et plus particulièrement le mélange de NaNO₃ à raison de 60 % et de KNO₃ à raison de 40 %.

12. Procédé pour accumuler de l'énergie thermique avec les étapes opératoires revendiquées respectives qui utilisent ou qui sont celles incorporées dans un système selon l'une quelconque des revendications 1 à 11.
